(19) Europäisches Patentamt
European Patent Office
Office européen des brevets

(11) **EP 4 675 521 A1**

(12) **EUROPEAN PATENT APPLICATION**
published in accordance with Art. 153(4) EPC


(43) Date of publication:
**07.01.2026 Bulletin 2026/02**

(21) Application number: **24763436.3**

(22) Date of filing: **23.01.2024**

(51) International Patent Classification (IPC):
***G06N 99/00*** *(2019.01)* ***G06N 3/126*** *(2023.01)*
***G06N 10/60*** *(2022.01)*

(52) Cooperative Patent Classification (CPC):
**G06N 10/60; G06N 3/126; G06N 5/01; G06N 7/01; G06N 20/00; G06N 99/00**

(86) International application number:
**PCT/JP2024/001892**

(87) International publication number:
**WO 2024/180951 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.02.2023 JP 2023029896**



(71) Applicant: **FUJITSU LIMITED**
**Kawasaki-shi, Kanagawa 211-8588 (JP)**

(72) Inventors:
- **MARUO, Akito**
  **Kawasaki-shi, Kanagawa 211-8588 (JP)**
- **JIPPO, Hideyuki**
  **Kawasaki-shi, Kanagawa 211-8588 (JP)**
- **SOEDA, Takeshi**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**


(54) **CALCULATION PROGRAM, CALCULATION METHOD, AND INFORMATION PROCESSING DEVICE**


(57) [PROBLEM] Provide a calculation program, a calculation method, and an information processing device capable of reducing the number of sampling times [SOLUTION TO PROBLEM] A calculation program causes a computer to execute a process including determining a first set number and a second set number according to accuracy of an Ising model, in repeating of a process of creating the Ising model based on a learning data group, searching for the first set number of a first recommendation point for the Ising model using an Ising machine, searching for the second set number of a second recommendation point for a learning data by a genetic algorithm, and adding the first recommendation point and a first evaluation value of the first recommendation point, and the second recommendation point and a second evaluation value of the second recommendation point, respectively, to the learning data group as a learning data.


FIG. 5

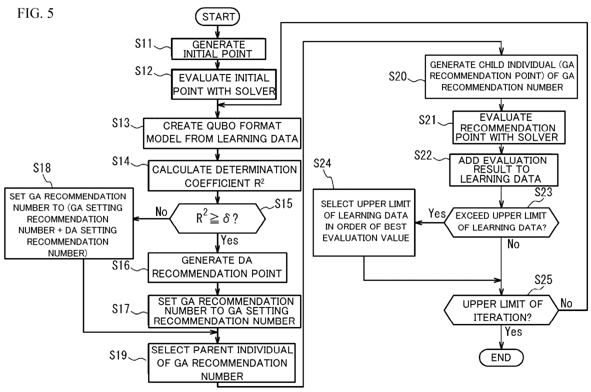


EP 4 675 521 A1

## Description

[TECHNICAL FIELD]

The present invention relates to a calculation program, a calculation method and an information processing device.

[BACKGROUND ART]

Technologies have been disclosed that perform optimization by sampling binary variables (see, for example, Patent Documents 1 to 3).

[CITATION LIST]

PATENT DOCUMENT

[PATENT DOCUMENT 1]
Japanese Patent Application Publication No. 2022-190752
[PATENT DOCUMENT 2]
Japanese Patent Application Publication No. 2021-33544
[PATENT DOCUMENT 3]
Japanese Patent Application Publication No. 2022-45870

[SUMMARY OF THE INVENTION]

[TECHNICAL PROBLEM]

For example, sampling technology using a QUBO-format Ising model is a method for sequentially sampling recommendation points on the model, which may limit the sampling area. Therefore, it is possible to use multiple recommendation methods. However, when multiple recommendation methods are used, it is difficult to adjust the number of recommendations. As a result, there is a risk that the number of samplings may become too many.

In one aspect, the present invention aims to provide a calculation program, a calculation method, and an information processing device that can reduce the number of samplings.

[SOLUTION TO PROBLEM]

In one aspect, a calculation program is characterized by causing a computer to execute a process including: determining a first set number and a second set number according to accuracy of an Ising model, in repeating of a process of creating the Ising model based on a learning data group, searching for the first set number of a first recommendation point for the Ising model using an Ising machine, searching for the second set number of a second recommendation point for a learning data by a genetic algorithm, and adding the first recommendation point and a first evaluation value of the first recommendation point, and the second recommendation point and a second evaluation value of the second recommendation point, respectively, to the learning data group as a learning data.

[ADVANTAGEOUS EFFECTS OF INVENTION]

It is possible to reduce the number of samplings.

[BRIEF DESCRIPTION OF THE DRAWINGS]

[FIG. 1]
Presented is a diagram illustrating a solution search in a QUBO format.
[FIG. 2]
Presented is a diagram illustrating evaluation values of movies watched by many users.

[FIG. 3]
Presented is a flowchart of an execution procedure of a sampling technique using a QUBO format model.
[FIG. 4]
(a) is a block diagram illustrating an overall configuration of an information processing device, and (b) is a block diagram illustrating a hardware configuration of an information processing device.
[FIG. 5]
Presented is a flowchart of an example of an operation of an information processing device.
[FIG. 6]
(a) is a diagram illustrating crossover, and (b) is a diagram illustrating mutation.
[FIG. 7]
(a) is a diagram illustrating an optimization problem for a magnetic shield, (b) is a diagram illustrating an arrangement of Gaussian basis functions, and (c) is a diagram illustrating magnetic flux lines generated from a coil.
[FIG. 8]
Presented is a diagram illustrating positive and negative arrangements.
[FIG. 9]
Presented is a diagram of distribution of a shape function y.
[FIG. 10]
(a) and (b) are figures of simulation results.
[FIG. 11]
(a) and (b) are figures of simulation results.
[FIG. 12]
(a) to (c) are lists of results obtained by each search using a random sampling method, an FMDA-only method, and a method of this embodiment.
[FIG. 13]
(a) is a graph of a number of DA recommendations and a number of GA recommendations in each iteration, and (b) is a graph of a plot of best value in each iteration.

[DESCRIPTION OF EMBODIMENTS]

Binary variable sampling technology is used as a technique for searching for a good solution with a high evaluation value from a large number of combinations and sequences. Examples of binary variable sampling technology are such as random sampling technology, sampling technology using a QUBO format Ising model and so on.

Random sampling technology allows easy sampling, but has the disadvantage that sampling efficiency is poor and a large number of samplings are required to obtain a good solution with high accuracy.

An example of a sampling technology using a QUBO format model is FMQA (Factorization Machine with Quantum Annealing) or the like. FMQA is a method that combines QA (quantum annealing) and FM (machine learning method). FMQA creates a QUBO format FM model from training data, finds a good solution through QA, analyzes the evaluation value of the good solution with a solver, adds the result to the training data, and performs sampling interactively. Another sampling technique using a QUBO model is the FMDA technique. FMDA replaces the QA part of FMQA with DA (Digital Annealer).

Here, the QUBO format stands for Quadratic Unconstrained Binary Optimization, which is a format that allows binary optimization without quadratic constraints. The QUBO format can be expressed, for example, as in the following equation. Note that $x_i = 0$ or 1 ($i = 1, ..., N$). $W_{ij}$ is the coupling coefficient between $x_i$ and $x_j$. $b_i$ is the bias coefficient of $x_i$. The first term on the right side is a quadratic term and represents the interaction. The second term on the right side is a linear term and represents the bias action. The third term on the right side is a constant term. In the QUBO format, a good solution x for minimizing E(x), which represents energy, is searched for according to the following equation, as illustrated in FIG. 1.

[Equation 1]

$$E(\boldsymbol{x}) = -\sum_{i,j} W_{ij} x_i x_j - \sum_i b_i x_i + \text{const.}$$

Here, we will explain the outline of FMDA as an example of a sampling technique using a QUBO format model. FIG. 2 illustrates the evaluation values of movies watched by many users. These evaluation values are in the form of n-dimensional vectors. First, a QUBO format model to represent interactions is created from these evaluation values. The QUBO format model can be expressed as the following equation.

[Equation 2]

$$\hat{y}(\boldsymbol{x}^{(k)}) := w_0 + \sum_{i=1}^{n} w_i x_i^{(k)} + \sum_{i=1}^{n} \sum_{j=i+1}^{n} \langle \boldsymbol{v}_i, \boldsymbol{v}_j \rangle x_i^{(k)} x_j^{(k)}$$

In the above equation, $w_0$, $w_i$, $v_i$, and $v_j$ are coefficients to be learned. This machine learning model is a model that is strong against sparse data sets. Since this model is in the QUBO format, a QUBO format model can be automatically generated by learning FM.

FIG. 3 is a flowchart of the execution procedure of a sampling technique using a QUBO format model. As illustrated in FIG. 3, first, a group of learning data is generated by randomly generating learning data (initial points) (step S1). The number of learning data to be generated is determined by the user's settings.

Next, a solver is used to calculate the evaluation values of the initial points (step S2). The evaluation value is an index for judging whether the initial point and the recommendation point described later are good or not. Through the above steps, an initial learning data group consisting of a set of the initial point and the evaluation value is generated.

Next, a QUBO format model is created by generating an FM from the learning data group (step S3). Since the FM is in the QUBO format, generating an FM is equivalent to generating a QUBO format model. Other machine learning models can be used as long as they can generate a QUBO format model.

Next, DA is used to optimize the created QUBO format model, and a good solution (DA recommendation point) with the best evaluation value is generated (step S4).

Next, a solver is used to calculate the evaluation value of the DA recommendation point (step S5).

Next, the evaluation result (a set of recommendation point and evaluation value) is added to the learning data group as learning data (step S6).

Next, it is determined whether the number of iterations has reached the upper limit (step S7). If the result of the determination in step S7 is "No", the process is executed again from step S3. As a result, steps S3 to S6 are repeated until the termination condition is met. If the result of the determination in step S7 is "Yes", the execution of the flowchart ends. Note that, as the termination condition, a condition such as a case where the change in the objective function is less than a threshold value for a certain period of time can be used.

The above procedure updates the learning data group, and an optimal solution can be obtained.

Note that, although FMDA is described in FIG. 3, the DA part of FMDA may be replaced with QA, and other methods may be used as long as the Ising machine can solve QUBO.

The sampling technique using the QUBO format model is a method of sequentially sampling the recommendation points on the model, so there is a risk that the sampling area may be limited. Furthermore, in sampling techniques using QUBO format models, sampling performance depends on the set of training data used to generate the model. Also, because FM is a second-order model, there is a possibility that it may not be able to fully express the problem. Also, when using multiple recommendation methods, it is difficult to adjust the number of recommendations. For these reasons, in order to increase the accuracy of the search for the optimal solution, the number of samplings becomes large.

Therefore, in the following embodiment, an example in which the number of samplings can be reduced is described.

[First Embodiment]

FIG. 4(a) is a block diagram illustrating an example of the overall configuration of an information processing device 100. As illustrated in FIG. 4A, the information processing device 100 includes a storage 10, an initial point generator 20, an evaluator 30, an FMDA executor 40, a GA executor 50, a learning data updater 60, an outputter 70, and the like.

FIG. 4(b) is a block diagram illustrating an example of the hardware configuration of the information processing device 100. As illustrated in FIG. 4(b), the information processing device 100 includes a CPU 101, a RAM 102, a storage device 103, an input device 104, a display device 105, and the like.

The CPU (Central Processing Unit) 101 is a central processing unit. The CPU 101 includes one or more cores. The RAM (Random Access Memory) 102 is a volatile memory that temporarily stores the program executed by the CPU 101, the data processed by the CPU 101, and the like. The storage device 103 is a non-volatile storage device. For example, a ROM (Read Only Memory), a solid state drive (SSD) such as a flash memory, or a hard disk driven by a hard disk drive can be used as the storage device 103. The storage device 103 stores a calculation program. The input device 104 is an input device such as a keyboard or a mouse. The display device 105 is a display device such as an LCD (Liquid Crystal Display). When the CPU 101 executes the calculation program, the storage 10, the initial point generator 20, the evaluator 30, the FMDA executor 40, the GA executor 50, the learning data updater 60, the outputter 70, and the like are realized. In addition, hardware such as dedicated circuits may be used as the storage 10, the initial point generator 20, the evaluator 30, the FMDA executor 40, the GA executor 50, the learning data updater 60, the outputter 70, and the like.

FIG. 5 is a flowchart of an example of the operation of the information processing device 100. As illustrated in FIG. 5, the initial point generator 20 generates a learning data group by randomly generating learning data (initial points) (step S11). The number of learning data to be generated is determined by the user's settings.

Next, the evaluator 30 uses a solver to calculate the evaluation values of the initial points (step S12). The initial learning data group, which is a set of the initial point obtained in step S11 and the evaluation value calculated in step S12, is stored in the storage 10.

Next, the FMDA executor 40 generates a model in the QUBO format by generating an FM from the training data group stored in the storage 10 (step S13). Since the FM is in the QUBO format, generating an FM is equivalent to generating a model in the QUBO format. Other machine learning models can be used as long as they can generate a model in the QUBO format.

Next, the FMDA executor 40 calculates the coefficient of determination R2 for the training data group of the FM model (step S14). The coefficient of determination R2 is an index of model accuracy, and the closer it is to 1, the better the accuracy of searching for a good solution with a high evaluation value. The coefficient of determination R2 can be calculated, for example, by the following equation.

[Equation 3]

$$R^2 = 1 - \frac{\sum_{i=1}^{n}(y_i - \hat{y})}{\sum_{i=1}^{n}(y_i - \bar{y})^2}$$

In the equation, $y_i$ is the actual measurement value. The equation below is the predicted value.

[Equation 4]

$$\hat{y}$$

The equation below is the average value of the actual measurement values.

[Equation 5]

$$\bar{y}$$

Next, the FMDA executor 40 judges whether the coefficient of determination R2 is equal to or greater than a threshold value δ (step S15). The threshold value δ is preset by the user. Here, an example of the threshold value δ will be described. For example, when step S15 is executed for the first time, the threshold value δ is set to about 0.8. It is preferable to reduce the value of the threshold value δ when the DA recommendation is working effectively, and to increase the value of the threshold value δ when the DA recommendation is not working effectively. For example, whether the DA recommendation is working effectively can be judged by whether the ratio of the results judged as "Yes" in step S15 is equal to or greater than a threshold value.

If the result in step S15 is "Yes", the FMDA executor 40 generates DA recommendation points by QUBO optimization by DA for the number of DA setting recommendations (step S16). The number of DA setting recommendations is preset by the user. The DA recommendation points are the good solutions (recommendation points) that have the best evaluation value. Alternatively, the DA recommendation point is a good solution (recommendation point) whose evaluation value is equal to or greater than a threshold value. Alternatively, the DA recommendation point is a good solution (recommendation point) whose evaluation value is within a predetermined top ranking.

Then, the GA executor 50 sets the GA recommendation number to the GA setting recommendation number (step S17).

If the result of step S15 is "No", the GA executor 50 sets the GA recommendation number to (GA setting recommendation number + DA setting recommendation number) (step S18). The GA setting recommendation number is preset by the user. The GA recommendation number does not have to be (GA setting recommendation number + DA setting recommendation number), but may be a number that is greater than the GA recommendation number.

After execution of step S16 or step S18, the GA executor 50 selects parent individuals equal to the number of GA recommendations from the learning data group stored in the storage 10 (step S19). The method of selecting parent individuals is not particularly limited, but may include a method of randomly extracting individuals (tournament size NT) that exceed the number of GA recommendations from the learning data group, and selecting individuals that are equal to the number of GA recommendations with high evaluations from among them (tournament selection). Alternatively, individuals equal to the number of GA recommendations with the highest evaluations may be selected from the learning data group (elite selection). The tournament size NT is preset by the user.

Then, the GA executor 50 generates the number of child individuals (GA recommendation points) to be recommended by the GA from the parent individuals by crossover and mutation (step S20). FIG. 6(a) is a diagram illustrating crossover. For example, some genes (crossover points) of parent individual A and some genes (crossover points) of parent individual B are randomly determined and swapped to generate child individuals A and B. FIG. 6(b) is a diagram illustrating mutation. For example, a randomly selected gene is replaced with an allele. The crossover probability and mutation probability are preset by the user.

Then, the evaluator 30 uses a solver to calculate the evaluation value of the recommendation points (step S21). The recommendation points here refer to the DA recommendation points and GA recommendation points if step S16 is executed, and refer to the GA recommendation points if step S18 is executed.

Next, the learning data updater 60 adds the evaluation result (a set of recommendation points and evaluation value) to the learning data group as learning data (step S22).

Next, the learning data updater 60 judges whether the number of learning data in the learning data group exceeds the upper limit (step S23). The upper limit of the number of learning data is preset by the user.

If the judgment in step S23 is "Yes", the learning data updater 60 selects the upper limit of learning data in order of best evaluation value, and deletes the learning data other than the selected learning data (step S24). Alternatively, the learning data updater 60 may select learning data whose evaluation value is equal to or greater than a predetermined value, and delete the learning data other than the selected learning data.

If the judgment in step S23 is "No", or after execution of step S24, the FMDA executor 40 judges whether the number of iterations has reached the upper limit (step S25). The number of times step S25 is executed may be the number of iterations. The upper limit of the number of iterations is preset by the user.

If the judgment in step S25 is "No", execution is performed again from step S13. If the determination in step S25 is "Yes", execution of the flowchart ends.

The outputter 70 outputs the results of the processing in FIG. 5. The output results are displayed, for example, by the display device 105. For example, the outputter 70 may output the contents of the learning data group, or may output learning data with a high evaluation value from the learning data group as a good solution.

According to this embodiment, the number of DA setting recommendations and the number of GA setting recommendations are determined according to the accuracy of the FM model generated from the learning data group. This makes it possible to achieve both high accuracy for obtaining a good solution and a reduction in the number of samplings.

For example, if the accuracy of the FM model generated from the learning data is low, there is a risk that the accuracy of searching for a good solution in DA will be low. Therefore, the number of GA recommendations is increased without DA recommendation. By using GA, the learning data can be taken as a group of individuals and recommendation points can be generated using GA processing. This makes it possible to sample a wide range of areas where the evaluation value is likely to improve. In this case, since DA recommendation is not performed with low accuracy, as a result, a good solution can be obtained with high accuracy with a small number of samplings.

For example, if the accuracy of the FM model generated from the learning data group is high, a good solution on the FM model can be generated as a recommendation point by DA. In this case, areas with high evaluation values can be actively sampled. This makes it possible to reduce the number of samplings required to obtain a good solution.

As described above, this embodiment can achieve both high accuracy for obtaining a good solution and a reduction in the number of sampling times.

Furthermore, when the number of data in the training data group exceeds the upper limit, the training data group is updated according to the evaluation value of each piece of training data contained in the training data group, thereby improving the accuracy of the modeling used for sampling.

(Simulation Results) Below, we will explain the results of a simulation in which a hypothetical problem was set and the computational processing according to the above embodiment was performed. FIG. 7(a) is a diagram illustrating an optimization problem for a magnetic shield. FIG. 7(a) is a diagram illustrating a magnetic shield analysis model, and illustrates the coil, magnetic body design area, and target area. The target area is an area where it is desired to prevent the influence of magnetic flux. The magnetic body design area is an area for placing the magnetic body. FIG. 7(b) is a diagram illustrating the placement of Gaussian basis functions. As illustrated in FIG. 7(b), 96 magnetic bodies can be placed in the magnetic body design area. FIG. 7(c) is a diagram illustrating the magnetic flux lines generated from the coil.

The table in FIG. 8 is a diagram illustrating positive placement and negative placement. s1 to s96 indicate 96 positive placement locations. In s1 to s96, "0" indicates that no magnetic body is placed, and "1" indicates that a magnetic body is placed. z1 to z96 indicate 96 negative placement locations. "0" in z1 to z96 indicates that no magnetic material is placed, and "1" indicates that a magnetic material is placed.

This placement problem can be expressed as the shape function y as expressed in the following equation. $s_i, z_i \in \{0,1\}$, and $w_i \in \{-1,0,1\}$. In this way, the optimization problem of the magnetic shield is viewed as a placement problem of positive and negative Gaussian basis functions.

[Equation 6]

$$y(x, s, z) = \sum_{i=1}^{N_G} (s_i - z_i) \left\{ G_i(x) / \sum_{j=1}^{N_G} G_j(x) \right\}$$

The distribution of the shape function y is illustrated in the upper diagram of FIG. 9. From this result, it becomes possible to determine material information from the magnitude of the shape function y, as illustrated in the lower diagram of FIG. 9. In the lower diagram of FIG. 9, if the shape function y is 0 or more, there is a substance, and if the shape function y is less than 0, there is no substance.

The purpose of magnetic shield shape optimization is to minimize the magnitude of the average magnetic flux density $B_{ave}^T$ and the magnetic material area $S_{mag}$ in the target area. Specifically, it involves minimizing the following equation. Note that $E_1$ is 1/10 of $B_{ave}^T$ when the entire design domain is air. $E_2$ is $S_{mag}$ when the entire design domain is magnetic.

[Equation 7]

$$E = \frac{\alpha}{E_1} B_{ave}^T + \frac{\beta}{E_2} S_{mag} \rightarrow \min.$$

This optimization problem was sampled using three methods: random sampling, FMDA only, and the method of this embodiment. The common settings were 96 initial points. $\alpha = 0.5$, $\beta = 0.5$. In the FMDA only method, the number of iterations was 1536, and the number of DA setting recommendations was 1. In the method of this embodiment, the number of iterations was 384, the number of DA setting recommendations was 1, the number of GA setting recommendations was 3, the tournament size NT was 5, the crossover probability was 0.7, the mutation probability was 0.3, the threshold $\delta$ was 0.85, and the upper limit of the learning data was 400.

FIG. 10(a), FIG. 10(b), FIG. 11(a), and FIG. 11(b) illustrate the results. FIG. 10(a) and FIG. 10(b) illustrate the best values found in the search. The vertical axis represents the energy E in the QUBO format. Therefore, the smaller the value on the vertical axis, the better the results. The number of CAE analyses on the horizontal axis indicates the number of iterations. FIG. 10(b) is an enlarged view of FIG. 10(a) with the vertical axis scaled. As illustrated in FIG. 10(a), FIG. 10(b), FIG. 11(a), and FIG. 11(b), the method of this embodiment can sample more efficiently than the random sampling method and the FMDA method.

FIG. 12(a) to FIG. 12(c) are lists of the results obtained by the search using the random sampling method, the FMDA-only method, and the method of this embodiment, respectively. The vertical axis represents the energy E in the QUBO format. Therefore, the smaller the value on the vertical axis, the better the results. In the random sampling method, the distribution of the obtained solutions is scattered throughout. In the FMDA method and the method of this embodiment, the results obtained in the iterative processing part are concentrated in a small area of E. It can be seen that the method of this embodiment can search for an area with even smaller E than the FMDA method.

FIG. 13(a) illustrates the DA recommendation number and the GA recommendation number in each iteration. FIG. 13(b) illustrates a plot of the best value in each iteration. As illustrated in FIG. 12(a) and FIG. 12(b), it can be seen that the FMDA recommendation works effectively in the early iteration, and the GA recommendation becomes dominant in the later iteration.

In the above example, the DA setting recommendation number is an example of the first setting number, the DA recommendation point is an example of the first recommendation point, the GA setting recommendation number is an example of the second setting number, and the GA recommendation point is an example of the second recommendation point. The GA executor 50 that executes steps S17 and S18 in FIG. 5 functions as an example of a determiner that determines the first setting number and the second setting number according to the accuracy of the model.

The above-described embodiment is a preferred example of the present invention. However, the present disclosure is not limited to this, and various modifications can be made without departing from the scope of the present invention.

The following supplementary notes are further disclosed in relation to the above description of the embodiment.

(Supplementary Note 1)

A calculation program characterized by causing a computer to execute a process including:
determining a first set number and a second set number according to accuracy of an Ising model, in repeating of a process of creating the Ising model based on a learning data group, searching for the first set number of a first recommendation point for the Ising model using an Ising machine, searching for the second set number of a second recommendation point for a learning data by a genetic algorithm, and adding the first recommendation point and a first evaluation value of the first recommendation point, and the second recommendation point and a second evaluation value of the second recommendation point, respectively, to the learning data group as a learning data.

(Supplementary Note 2)

The calculation program according to Supplementary Note 1, characterized by causing the computer to execute:
a process of not searching for the first recommendation point and increasing the second set number of the second recommendation point and searching for the second recommendation point, when the accuracy of the Ising model is less than a threshold.

(Supplementary Note 3)

The calculation program according to Supplementary Note 1, characterized by causing the computer to execute:
not searching for the first recommendation point, and setting a sum of the first set number and the second set number as the second set number to search for the second recommendation point, when the accuracy of the Ising model is less than a threshold,

(Supplementary Note 4)

The calculation program according to Supplementary Note 1, characterized by causing the computer to execute:
searching for the first recommendation point and the second recommendation point without changing the first set number and the second set number, when the accuracy of the Ising model is equal to or greater than a threshold,

(Supplementary Note 5)

The calculation program according to Supplementary Note 1,

characterized in that an upper limit is set on a number of learning data in the learning data group, and
characterized by causing the computer to executer:
updating the learning data group according to an evaluation value of each of the learning data, when a number of the learning data in the learning data group exceeds the upper limit.

(Supplementary Note 6)

The calculation program according to Supplementary Note 5, characterized by causing the computer to execute:
leaving the upper limit number of the learning data in the learning data group in a descending order of evaluation value, and deleting other learning data, when the number of the learning data in the learning data group exceeds the upper limit.

(Supplementary Note 7)

A calculation method characterized in that a computer executes a process including:
determining a first set number and a second set number according to accuracy of an Ising model, in repeating of a process of creating the Ising model based on a learning data group, searching for the first set number of a first recommendation point for the Ising model using an Ising machine, searching for the second set number of a second recommendation point for a learning data by a genetic algorithm, and adding the first recommendation point and a first evaluation value of the first recommendation point, and the second recommendation point and a second evaluation value of the second recommendation point, respectively, to the learning data group as a learning data.

(Supplementary Note 8)

The calculation method according to Supplementary Note 7, characterized in that the computer executes:
a process of not searching for the first recommendation point and increasing the second set number of the second recommendation point and searching for the second recommendation point, when the accuracy of the Ising model is less than a threshold.

(Supplementary Note 9)

The calculation method according to Supplementary Note 7, characterized in that the computer executes:
not searching for the first recommendation point, and setting a sum of the first set number and the second set number as the second set number to search for the second recommendation point, when the accuracy of the Ising model is less than a threshold,

(Supplementary Note 10)

The calculation method according to Supplementary Note 7, characterized in that the computer executes:
searching for the first recommendation point and the second recommendation point without changing the first set number and the second set number, when the accuracy of the Ising model is equal to or greater than a threshold,

(Supplementary Note 11)

The calculation method according to Supplementary Note 7,

characterized in that an upper limit is set on a number of learning data in the learning data group, and
characterized in that the computer executes:
updating the learning data group according to an evaluation value of each of the learning data, when a number of the learning data in the learning data group exceeds the upper limit.

(Supplementary Note 12)

The calculation method according to Supplementary Note 11, characterized I that the computer executes:
leaving the upper limit number of the learning data in the learning data group in a descending order of evaluation value, and deleting other learning data, when the number of the learning data in the learning data group exceeds the upper limit.

(Supplementary Note 13)

An information processing device characterized by comprising:
a determiner configured to determine a first set number and a second set number according to accuracy of an Ising model, in repeating of a process of creating the Ising model based on a learning data group, searching for the first set number of a first recommendation point for the Ising model using an Ising machine, searching for the second set number of a second recommendation point for a learning data by a genetic algorithm, and adding the first recommendation point and a first evaluation value of the first recommendation point, and the second recommendation point and a second evaluation value of the second recommendation point, respectively, to the learning data group as a learning data.

(Supplementary Note 14)

The information processing device according to Supplementary Note 13 characterized in that the determiner does not search for the first recommendation point and increases the second set number of the second recommendation point and searches for the second recommendation point, when the accuracy of the Ising model is less than a threshold.

(Supplementary Note 15)

The information processing device according to Supplementary Note 13, characterized in that the determiner does not search for the first recommendation point, and sets a sum of the first set number and the second set number as the second set number to search for the second recommendation point, when the accuracy of the Ising model is less than a threshold,

(Supplementary Note 16)

The information processing device according to Supplementary Note 13, characterized in that the determiner searches for the first recommendation point and the second recommendation point without changing the first set number and the second set number, when the accuracy of the Ising model is equal to or greater than a threshold,

(Supplementary Note 17)

The information processing device according to Supplementary Note 13, characterized in that:

an upper limit is set on a number of learning data in the learning data group; and
the information processing device comprises a learning data updater configured to update the learning data group according to an evaluation value of each of the learning data, when a number of the learning data in the learning data group exceeds the upper limit.

(Supplementary Note 18)

The information processing device according to Supplementary Note 17, characterized in that the learning data updater leaves the upper limit number of the learning data in the learning data group in a descending order of evaluation value, and deletes other learning data, when the number of the learning data in the learning data group exceeds the upper limit.

[Description of Symbols

| | |
|---|---|
| 10 | Storage |
| 20 | Initial point generator |
| 30 | Evaluator |
| 40 | FMDA executor |
| 50 | GA executor |
| 60 | Learning data updater |
| 70 | Outputter |
| 100 | Information processing device |
| 101 | CPU |
| 102 | RAM |
| 103 | Storage device |
| 104 | Input device |
| 105 | Display device |

**Claims**

**1.** A calculation program **characterized by** causing a computer to execute a process including:
determining a first set number and a second set number according to accuracy of an Ising model, in repeating of a process of creating the Ising model based on a learning data group, searching for the first set number of a first recommendation point for the Ising model using an Ising machine, searching for the second set number of a second recommendation point for a learning data by a genetic algorithm, and adding the first recommendation point and a first evaluation value of the first recommendation point, and the second recommendation point and a second evaluation value of the second recommendation point, respectively, to the learning data group as a learning data.

2. The calculation program according to claim 1, **characterized by** causing the computer to execute:
a process of not searching for the first recommendation point and increasing the second set number of the second recommendation point and searching for the second recommendation point, when the accuracy of the Ising model is less than a threshold.

3. The calculation program according to claim 1, **characterized by** causing the computer to execute:
not searching for the first recommendation point, and setting a sum of the first set number and the second set number as the second set number to search for the second recommendation point, when the accuracy of the Ising model is less than a threshold.

4. The calculation program according to claim 1, **characterized by** causing the computer to execute:
searching for the first recommendation point and the second recommendation point without changing the first set number and the second set number, when the accuracy of the Ising model is equal to or greater than a threshold.

5. The calculation program according to claim 1,

**characterized in that** an upper limit is set on a number of learning data in the learning data group, and **characterized by** causing the computer to executer:
updating the learning data group according to an evaluation value of each of the learning data, when a number of the learning data in the learning data group exceeds the upper limit.

6. The calculation program according to claim 5, **characterized by** causing the computer to execute:
leaving the upper limit number of the learning data in the learning data group in a descending order of evaluation value, and deleting other learning data, when the number of the learning data in the learning data group exceeds the upper limit.

7. A calculation method **characterized in that** a computer executes a process including:
determining a first set number and a second set number according to accuracy of an Ising model, in repeating of a process of creating the Ising model based on a learning data group, searching for the first set number of a first recommendation point for the Ising model using an Ising machine, searching for the second set number of a second recommendation point for a learning data by a genetic algorithm, and adding the first recommendation point and a first evaluation value of the first recommendation point, and the second recommendation point and a second evaluation value of the second recommendation point, respectively, to the learning data group as a learning data.

8. The calculation method according to claim 7, **characterized in that** the computer executes:
a process of not searching for the first recommendation point and increasing the second set number of the second recommendation point and searching for the second recommendation point, when the accuracy of the Ising model is less than a threshold.

9. The calculation method according to claim 7, **characterized in that** the computer executes:
not searching for the first recommendation point, and setting a sum of the first set number and the second set number as the second set number to search for the second recommendation point, when the accuracy of the Ising model is less than a threshold.

10. The calculation method according to claim 7, **characterized in that** the computer executes:
searching for the first recommendation point and the second recommendation point without changing the first set number and the second set number, when the accuracy of the Ising model is equal to or greater than a threshold.

11. The calculation method according to claim 7,

**characterized in that** an upper limit is set on a number of learning data in the learning data group, and **characterized in that** the computer executes:
updating the learning data group according to an evaluation value of each of the learning data, when a number of the learning data in the learning data group exceeds the upper limit.

12. The calculation method according to claim 11, characterized I that the computer executes:

leaving the upper limit number of the learning data in the learning data group in a descending order of evaluation value, and deleting other learning data, when the number of the learning data in the learning data group exceeds the upper limit.

**13.** An information processing device **characterized by** comprising:
a determiner configured to determine a first set number and a second set number according to accuracy of an Ising model, in repeating of a process of creating the Ising model based on a learning data group, searching for the first set number of a first recommendation point for the Ising model using an Ising machine, searching for the second set number of a second recommendation point for a learning data by a genetic algorithm, and adding the first recommendation point and a first evaluation value of the first recommendation point, and the second recommendation point and a second evaluation value of the second recommendation point, respectively, to the learning data group as a learning data.

**14.** The information processing device according to claim 13 **characterized in that** the determiner does not search for the first recommendation point and increases the second set number of the second recommendation point and searches for the second recommendation point, when the accuracy of the Ising model is less than a threshold.

**15.** The information processing device according to claim 13, **characterized in that** the determiner does not search for the first recommendation point, and sets a sum of the first set number and the second set number as the second set number to search for the second recommendation point, when the accuracy of the Ising model is less than a threshold.

**16.** The information processing device according to claim 13, **characterized in that** the determiner searches for the first recommendation point and the second recommendation point without changing the first set number and the second set number, when the accuracy of the Ising model is equal to or greater than a threshold.

**17.** The information processing device according to claim 13, **characterized in that**:

an upper limit is set on a number of learning data in the learning data group; and
the information processing device comprises a learning data updater configured to update the learning data group according to an evaluation value of each of the learning data, when a number of the learning data in the learning data group exceeds the upper limit.

**18.** The information processing device according to claim 17, **characterized in that** the learning data updater leaves the upper limit number of the learning data in the learning data group in a descending order of evaluation value, and deletes other learning data, when the number of the learning data in the learning data group exceeds the upper limit.

FIG. 1

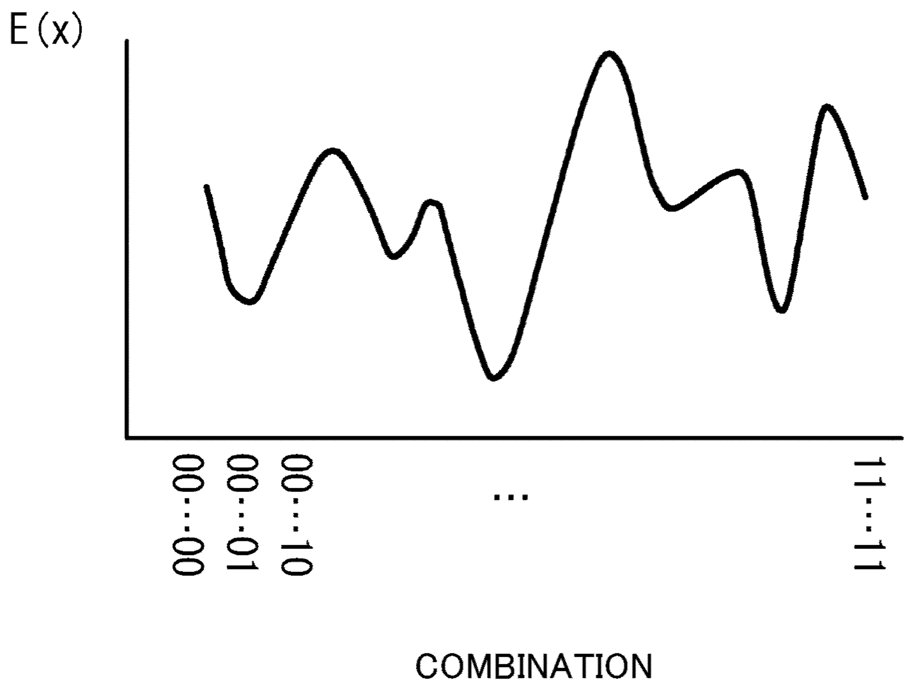

FIG. 2

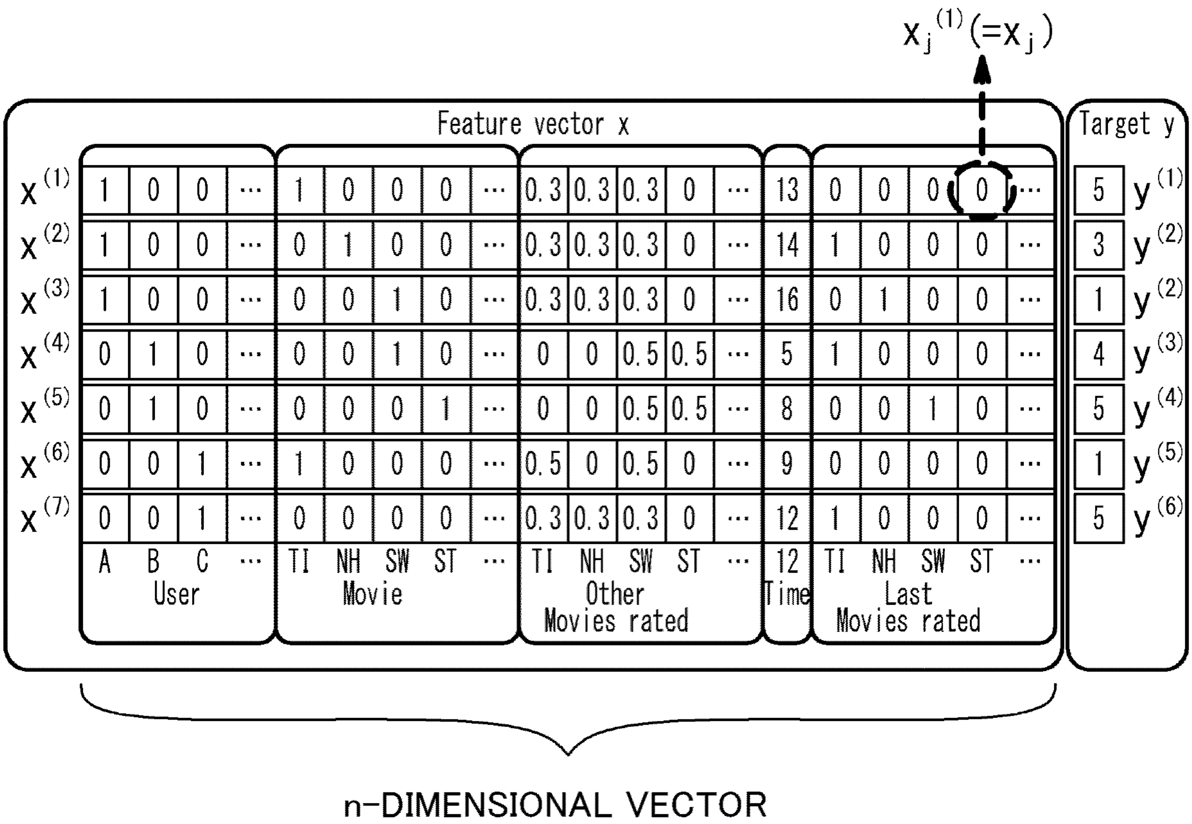
$x_j^{(1)} (=x_j)$
Feature vector x
Target y
User
Movie
Other Movies rated
Time
Last Movies rated
n-DIMENSIONAL VECTOR

FIG. 3

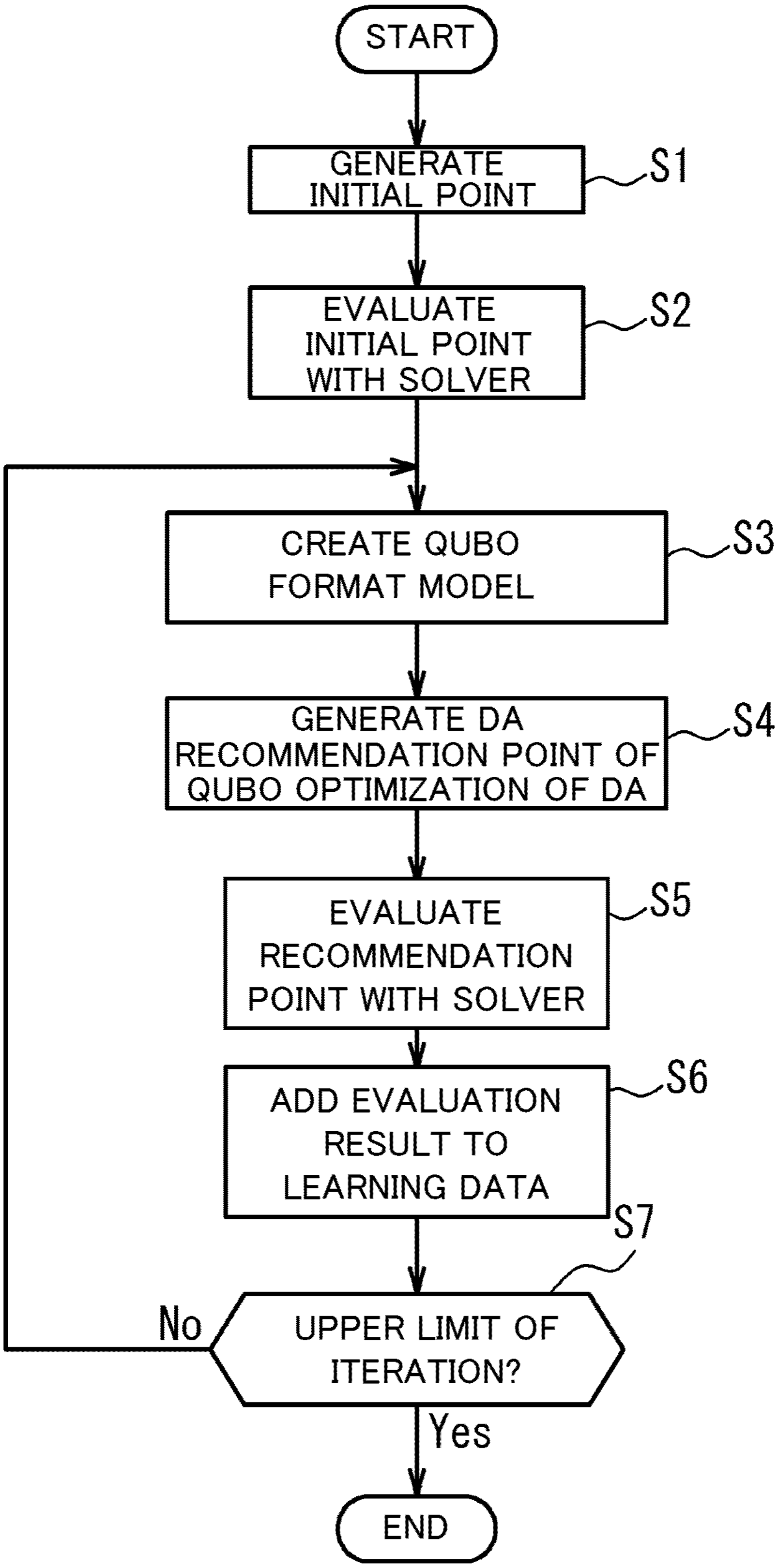
START
GENERATE INITIAL POINT
S1
EVALUATE INITIAL POINT WITH SOLVER
S2
CREATE QUBO FORMAT MODEL
S3
GENERATE DA RECOMMENDATION POINT OF QUBO OPTIMIZATION OF DA
S4
EVALUATE RECOMMENDATION POINT WITH SOLVER
S5
ADD EVALUATION RESULT TO LEARNING DATA
S6
S7
UPPER LIMIT OF ITERATION?
No
Yes
END

FIG. 4

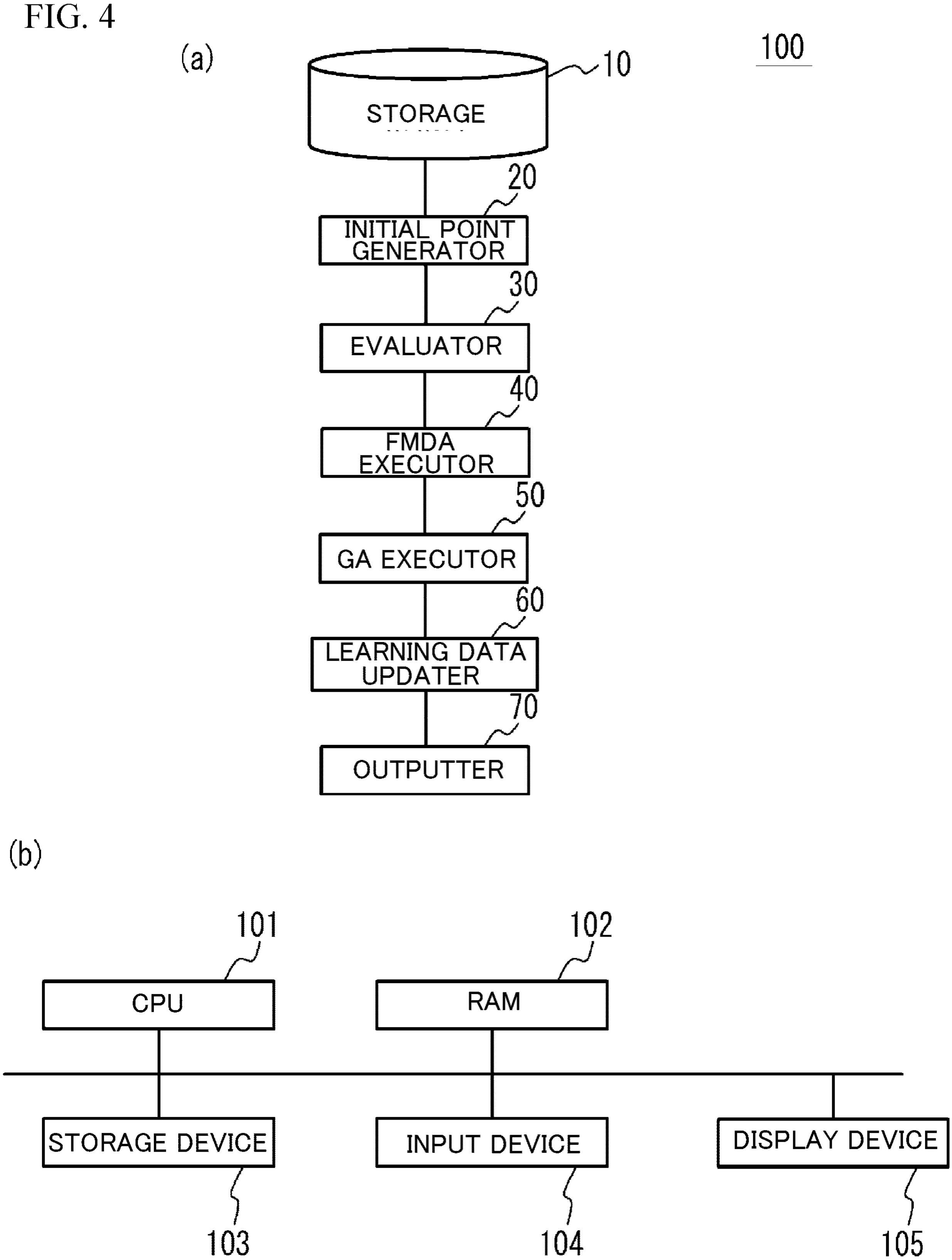
(a)
100
STORAGE
10
INITIAL POINT GENERATOR
20
EVALUATOR
30
FMDA EXECUTOR
40
GA EXECUTOR
50
LEARNING DATA UPDATER
60
OUTPUTTER
70
(b)
CPU
101
RAM
102
STORAGE DEVICE
103
INPUT DEVICE
104
DISPLAY DEVICE
105

FIG. 5

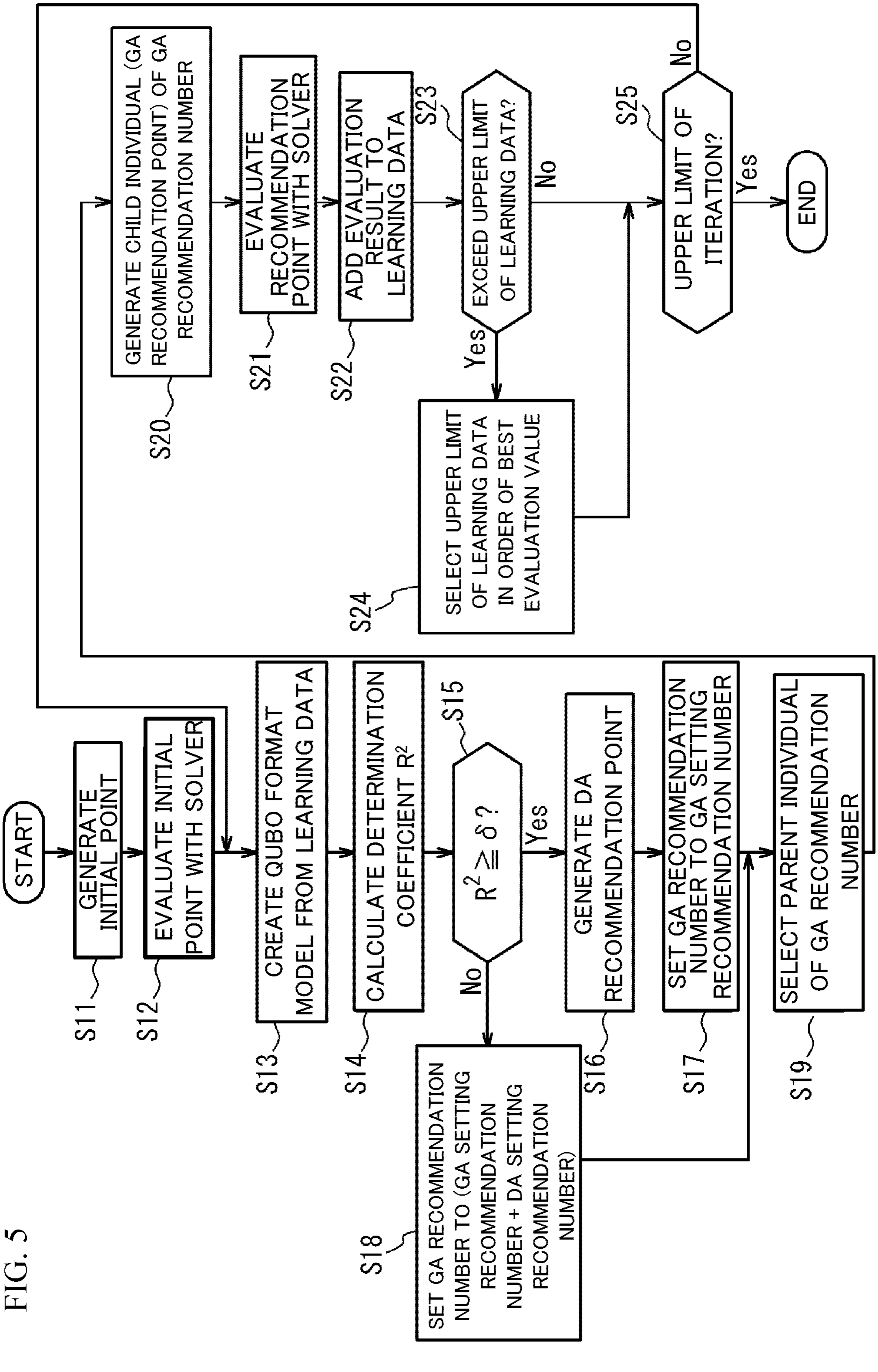
START
GENERATE INITIAL POINT
S11
EVALUATE INITIAL POINT WITH SOLVER
S12
CREATE QUBO FORMAT MODEL FROM LEARNING DATA
S13
CALCULATE DETERMINATION COEFFICIENT $R^2$
S14
$R^2 \geqq \delta$ ?
S15
Yes
No
GENERATE DA RECOMMENDATION POINT
S16
SET GA RECOMMENDATION NUMBER TO GA SETTING RECOMMENDATION NUMBER
S17
SET GA RECOMMENDATION NUMBER TO (GA SETTING RECOMMENDATION NUMBER + DA SETTING RECOMMENDATION NUMBER)
S18
SELECT PARENT INDIVIDUAL OF GA RECOMMENDATION NUMBER
S19
GENERATE CHILD INDIVIDUAL (GA RECOMMENDATION POINT) OF GA RECOMMENDATION NUMBER
S20
EVALUATE RECOMMENDATION POINT WITH SOLVER
S21
ADD EVALUATION RESULT TO LEARNING DATA
S22
EXCEED UPPER LIMIT OF LEARNING DATA?
S23
Yes
No
SELECT UPPER LIMIT OF LEARNING DATA IN ORDER OF BEST EVALUATION VALUE
S24
UPPER LIMIT OF ITERATION?
S25
Yes
No
END

FIG. 6

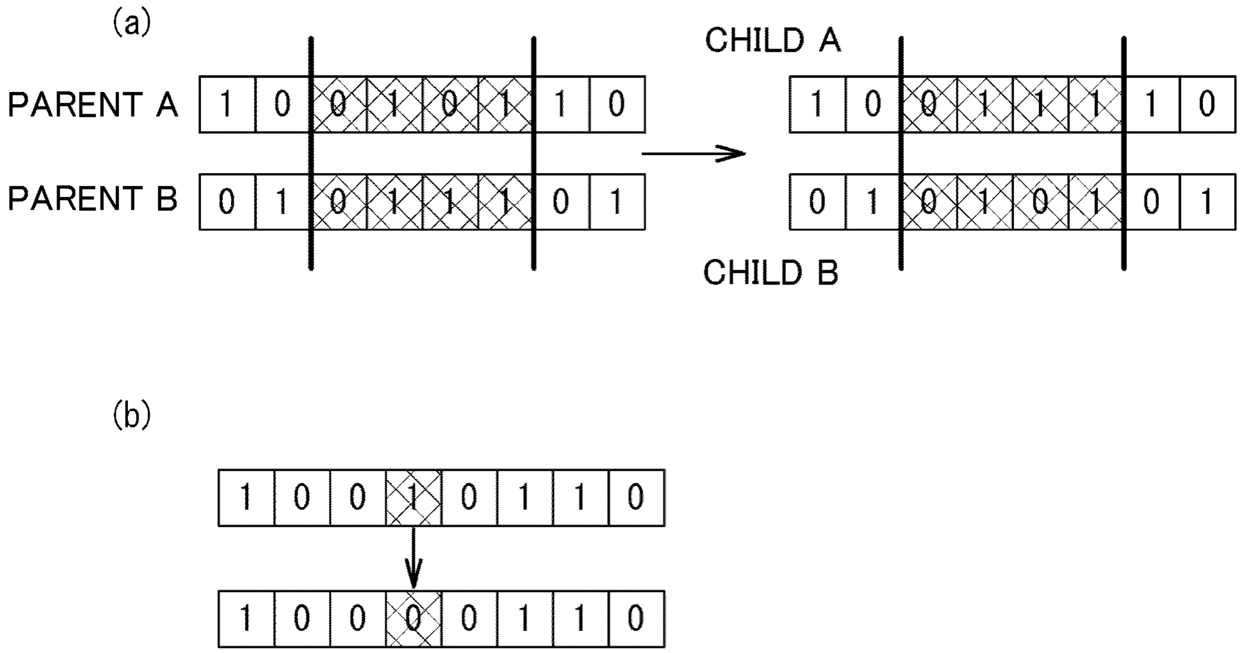
(a)
PARENT A
1 0 0 1 0 1 1 0
PARENT B
0 1 0 1 1 1 0 1
CHILD A
1 0 0 1 1 1 1 0
0 1 0 1 0 1 0 1
CHILD B
(b)
1 0 0 1 0 1 1 0
1 0 0 0 0 1 1 0

FIG. 7

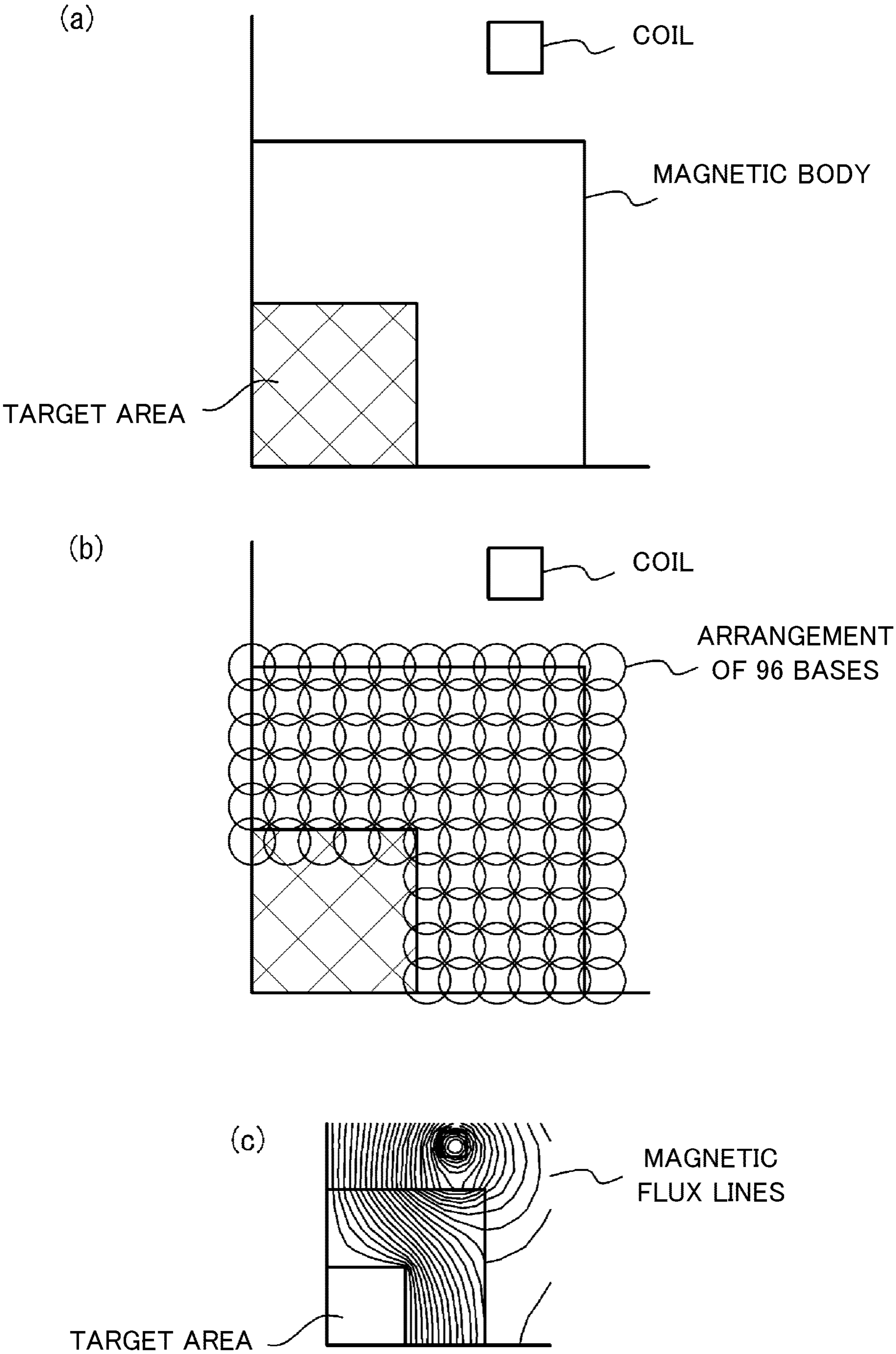
(a)
COIL
MAGNETIC BODY
TARGET AREA
(b)
COIL
ARRANGEMENT
OF 96 BASES
(c)
MAGNETIC
FLUX LINES
TARGET AREA

FIG. 8

| POSITIVE ARRANGEMENT | s1 | s2 | s3 | s4 | ··· | s93 | s94 | s95 | s96 |
|---|---|---|---|---|---|---|---|---|---|
| | 0 | 0 | 1 | 0 | ··· | 1 | 1 | 1 | 1 |

+

| NEGATIVE ARRANGEMENT | z1 | z2 | z3 | z4 | ··· | z93 | z94 | z95 | z96 |
|---|---|---|---|---|---|---|---|---|---|
| | 0 | 0 | 0 | 0 | ··· | 1 | 0 | 1 | 0 |

| WEIGHT OF GAUSSIAN BASIS FUNCTION | w1 | w2 | w3 | w4 | ··· | w93 | w94 | w95 | w96 |
|---|---|---|---|---|---|---|---|---|---|
| | 0 | 0 | 1 | 0 | ··· | 1 | 0 | 1 | 0 |

FIG. 9

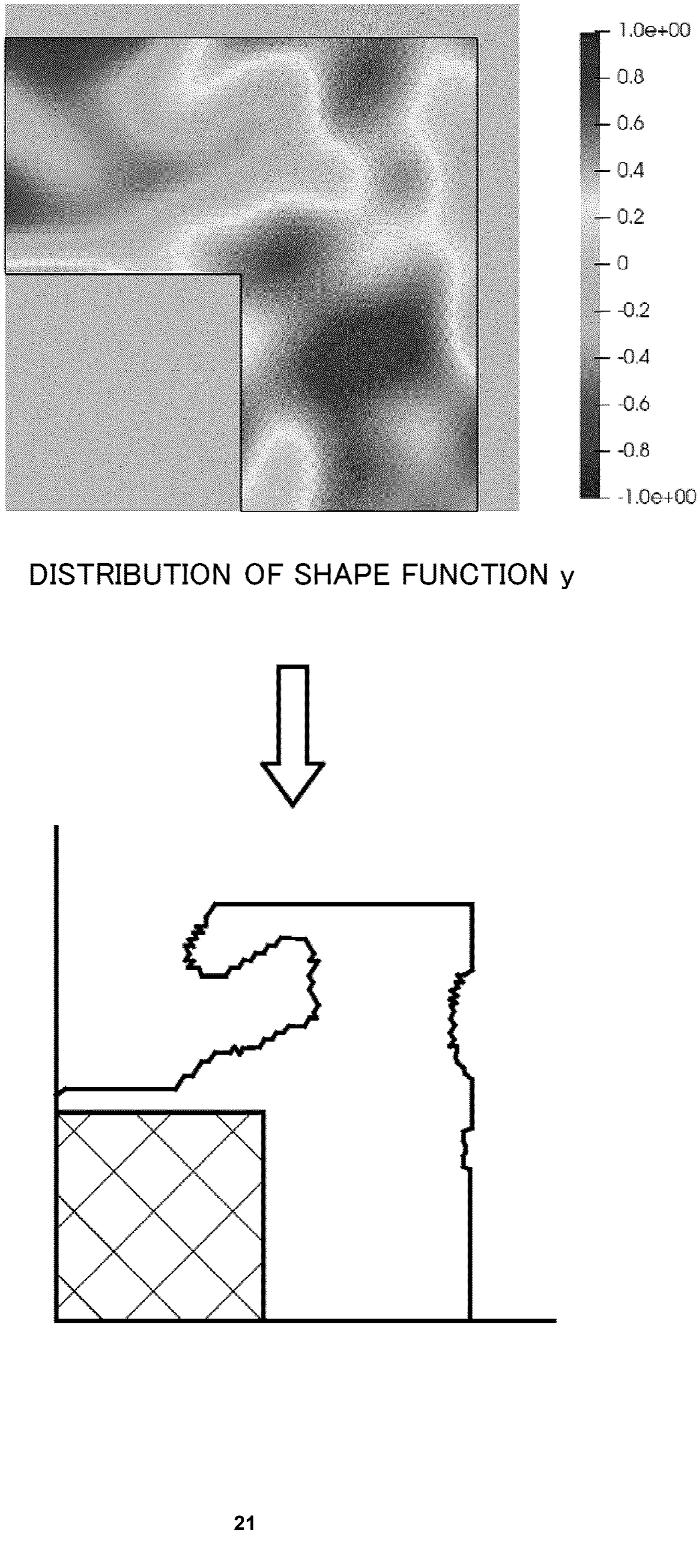
1.0e+00
0.8
0.6
0.4
0.2
0
-0.2
-0.4
-0.6
-0.8
-1.0e+00
DISTRIBUTION OF SHAPE FUNCTION y

FIG. 10

(a)

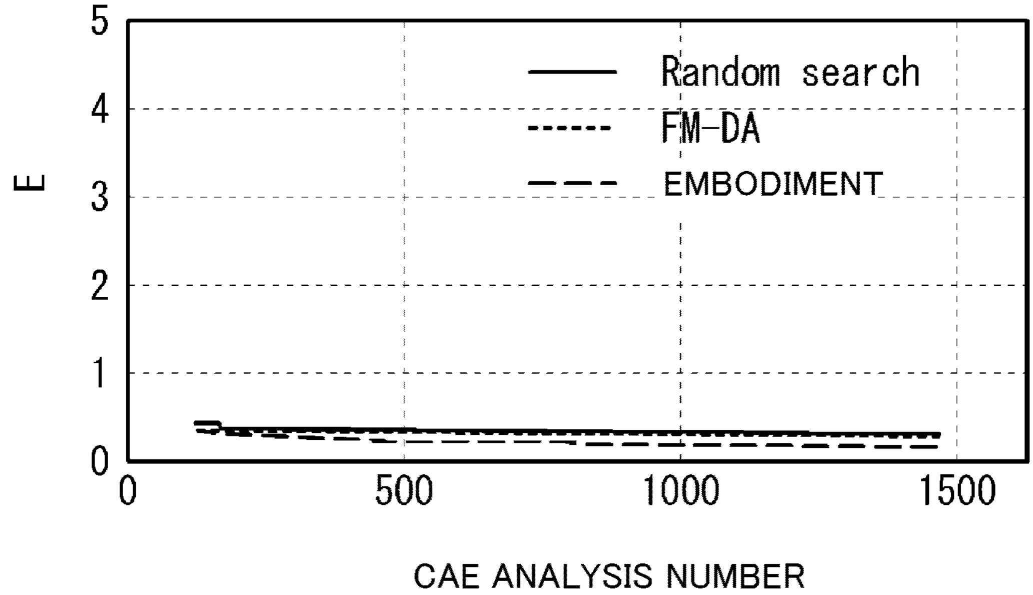
5
4
3
2
1
0
E
0
500
1000
1500
Random search
FM-DA
EMBODIMENT
CAE ANALYSIS NUMBER

(b)

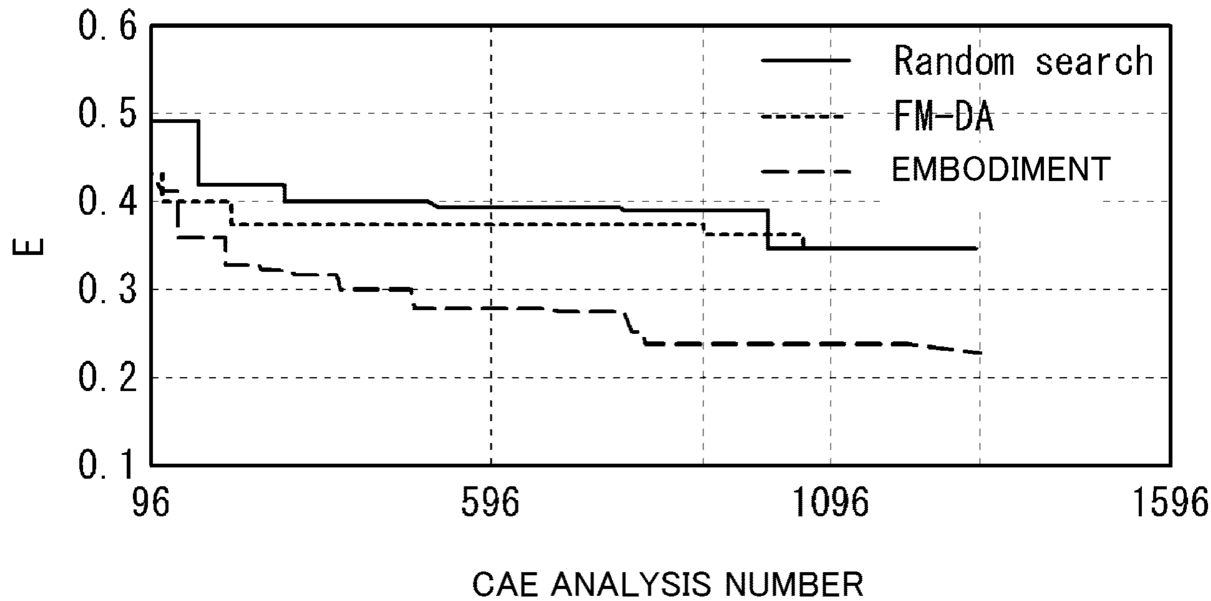
0. 6
0. 5
0. 4
0. 3
0. 2
0. 1
E
96
596
1096
1596
Random search
FM-DA
EMBODIMENT
CAE ANALYSIS NUMBER

FIG. 11

(a)

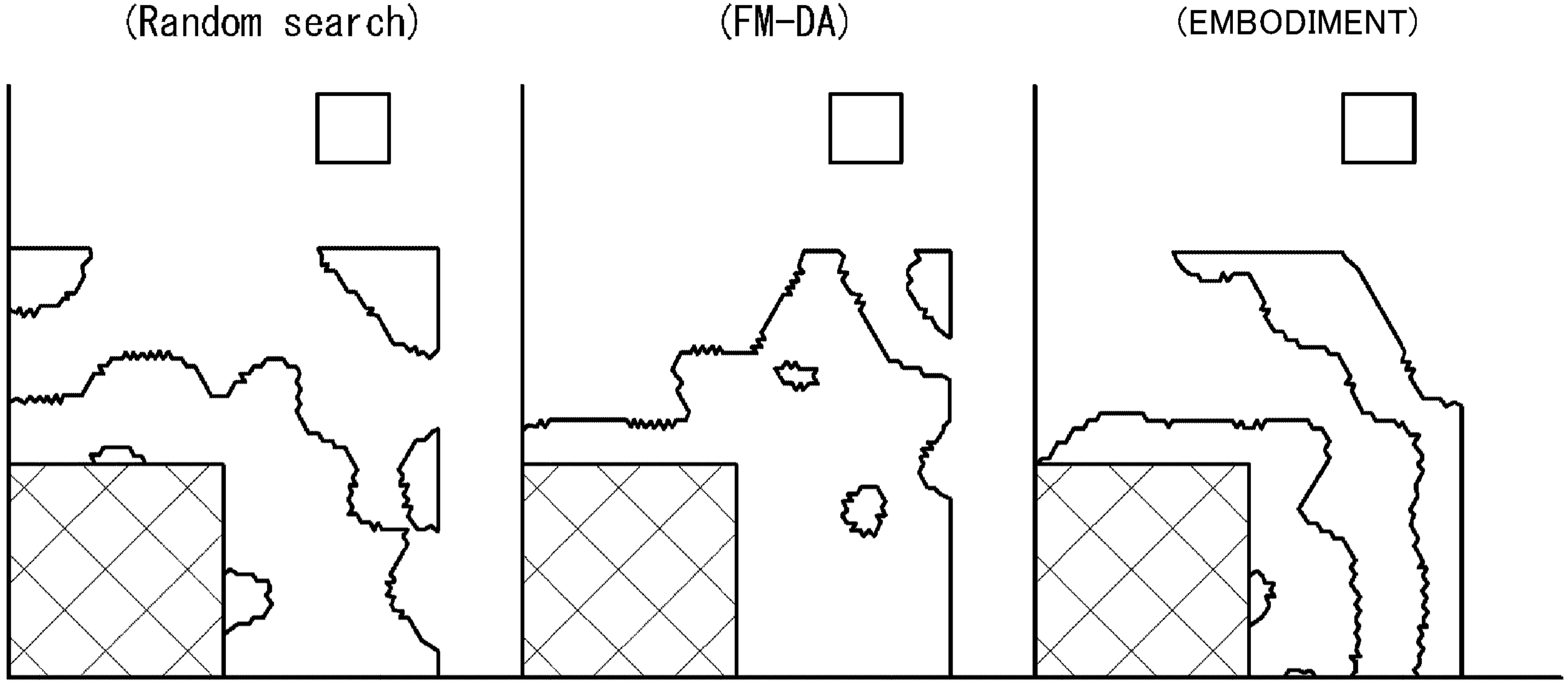


(b)

| | (Random search) | (FM-DA) | (EMBODIMENT) |
|---|---|---|---|
| $B^{T}_{ave}$ [mT] | 1. 672 | 0. 247 | 0. 229 |
| $S_{mag}$ [mm] | 4064 | 4846 | 3238 |
| E | 0. 347 | 0. 334 | 0. 226 |

FIG. 12

(a)

(b)

(c)

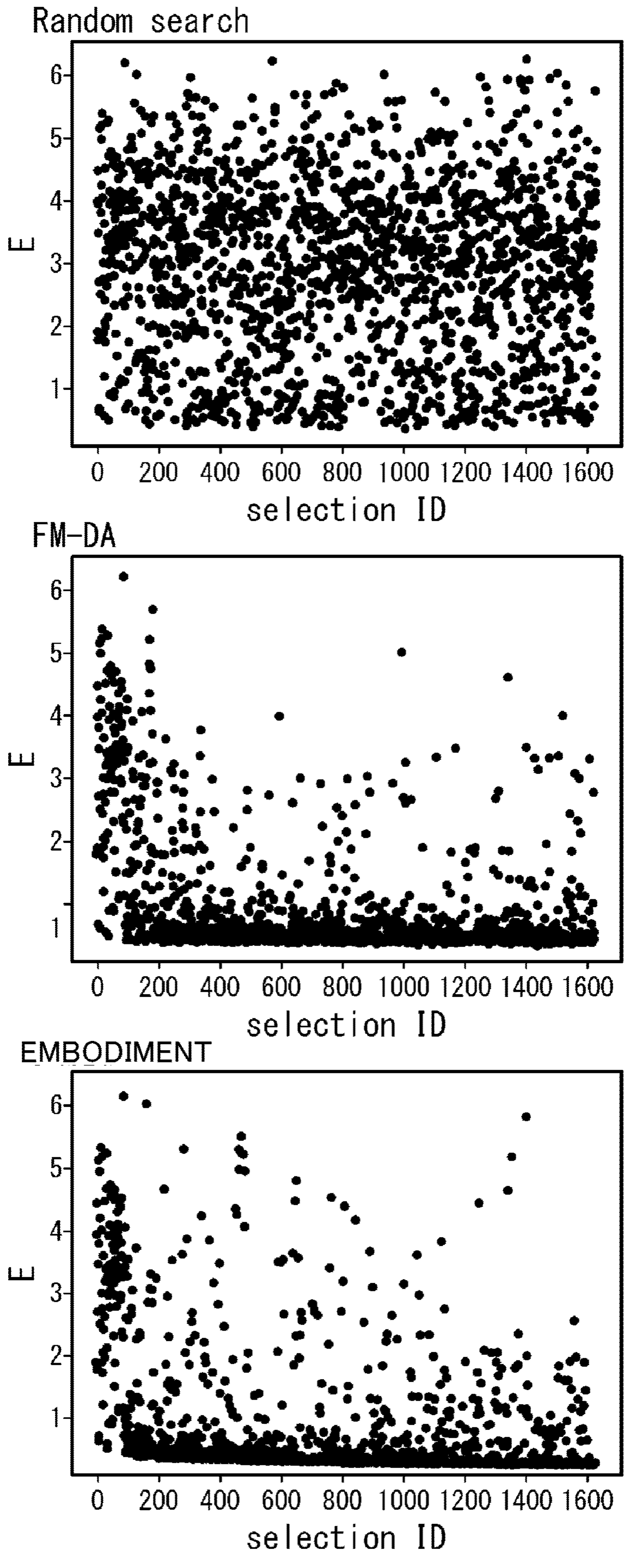
Random search
E
0 200 400 600 800 1000 1200 1400 1600
selection ID
FM-DA
E
0 200 400 600 800 1000 1200 1400 1600
selection ID
EMBODIMENT
E
0 200 400 600 800 1000 1200 1400 1600
selection ID

FIG. 13

(a)

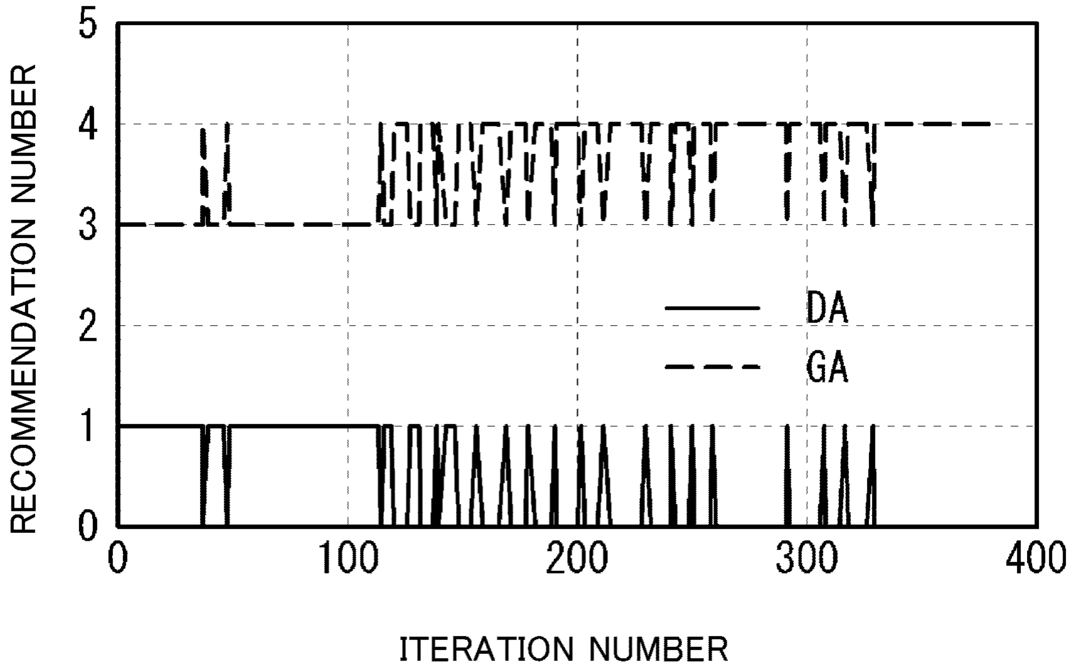
5
4
3
2
1
0
RECOMMENDATION NUMBER
DA
GA
0
100
200
300
400
ITERATION NUMBER

(b)

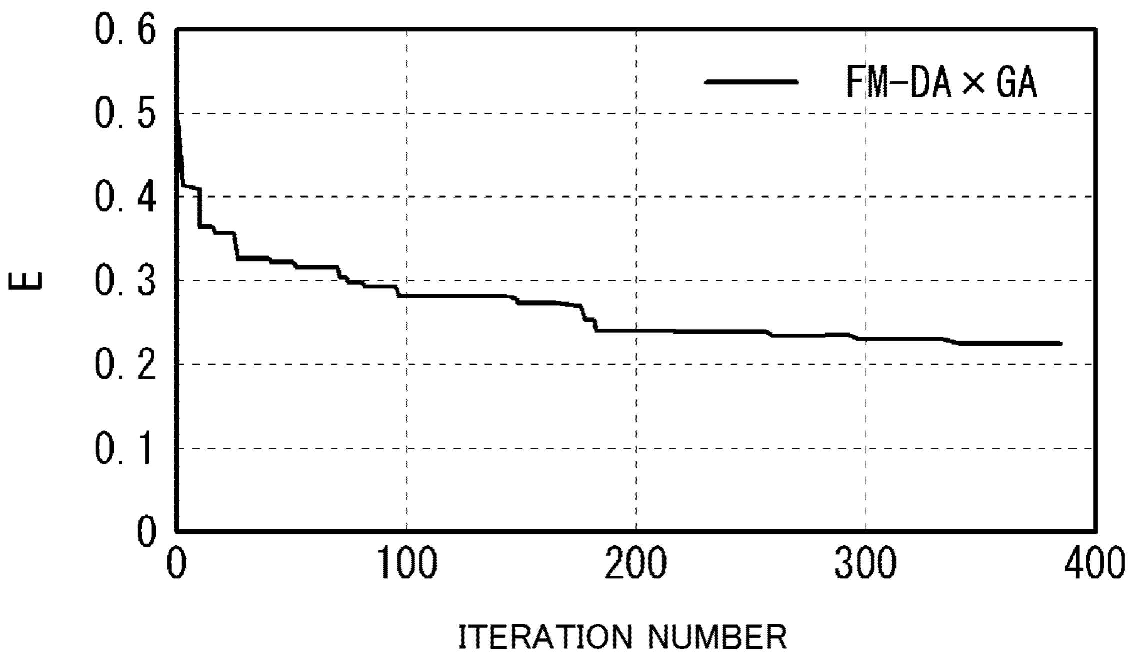
0. 6
0. 5
0. 4
0. 3
0. 2
0. 1
0
E
FM-DA × GA
0
100
200
300
400
ITERATION NUMBER

**INTERNATIONAL SEARCH REPORT**

International application No.
**PCT/JP2024/001892**

**A. CLASSIFICATION OF SUBJECT MATTER**

***G06N 99/00***(2019.01)i; ***G06N 3/126***(2023.01)i; ***G06N 10/60***(2022.01)i
FI: G06N99/00 180; G06N3/126; G06N10/60

According to International Patent Classification (IPC) or to both national classification and IPC

**B. FIELDS SEARCHED**

Minimum documentation searched (classification system followed by classification symbols)

G06N3/00-99/00; G06Q10/04-10/047; G06F17/17

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | 関 優也 ほか, Factorization Machineとイジングマシンを利用した整数変数最適化, 情報処理学会研究報告 量子ソフトウェア(QS) [online]. 17 March 2022, vol. 2022-QS-5, no. 1, pp. 1-7, [retrieved on 17 March 2022], Internet: <URL: https://ipsj.ixsq.nii.ac.jp/ej/?action=repository_uri&item_id=217623&file_id=1&file_no=1>, non-official translation (SEKI, Yuya et al. Integer variable optimization using factorization machine and ising machine. IPSJ SIG technical reports: Quantum Software (QS).)<br>abstract, chapter 4 | 1-18 |
| A | JP 2022-90249 A (FUJITSU LIMITED) 17 June 2022 (2022-06-17)<br>paragraphs [0009]-[0011] | 1-18 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 April 2024** | **09 April 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/001892**

| Patent document cited in search report | Publication date (day/month/year) | Patent family member(s) | Publication date (day/month/year) |
|---|---|---|---|
| JP 2022-90249 A | 17 June 2022 | EP 4009200 A1<br>paragraphs [0010]-[0012]<br>US 2022/0180210 A1<br>CN 114595549 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022190752 A
- JP 2021033544 A
- JP 2022045870 A